# EUROPEAN PATENT APPLICATION

(11) **EP 4 543 061 A1**
(43) Date of publication of application: **23.04.2025**
(21) Application number: 23823015.5
(22) Date of filing: 08.06.2023
(51) Int. Cl.: H04W 4/80, H04M 1/72412

(54) **INFORMATION ACQUISITION METHOD AND APPARATUS, AND ELECTRONIC DEVICE**

(30) Priority: 15.06.2022 CN 202210677758
(71) Applicant: Vivo Mobile Communication Co., Ltd., Dongguan, Guangdong 523863 (CN)
(72) Inventor: XIN, Haibo, Dongguan, Guangdong 523863 (CN)
(74) Representative: Conti, Marco
(86) International application number: PCT/CN2023/099102
(87) International publication number: WO 2023/241447

(57) **Abstract**

This application belongs to the field of mobile communication technologies, and discloses an information obtaining method and apparatus, and an electronic device. The method in this application includes: in a case that an information obtaining event is monitored, transmitting a first radio frequency signal with first strength, where the first radio frequency signal is used to obtain card information or target information of a target electronic device; and in a case that it is monitored that the information obtaining event is released, transmitting a second radio frequency signal with second strength, where the second radio frequency signal is used to obtain the card information or the target information of the target electronic device, and the first strength is greater than the second strength.

## Description

### CROSS-REFERENCE TO RELATED APPLICATIONS

This application claims priority to Chinese Patent Application No. 202210677758.3, filed on June 15, 2022 in China, which is incorporated herein by reference in its entirety.

### TECHNICAL FIELD

This application belongs to the field of mobile communication technologies, and specifically, relates to an information obtaining method and apparatus, and an electronic device.

### BACKGROUND

With development of science and technology, a near field communication (Near Field Communication, NFC) technology is gradually applied to fields such as file transmission, mobile payment, intelligent posters, public transportation, and health care. Mobile payment plays an increasingly important role in such a general background. The NFC technology features convenience and security, and is widely applied in the world as a bus card, a bank card, a subway card, and the like.

The NFC technology supports a read mode, a card simulation mode, a point-to-point mode, and the like. An information read function requires an electronic device supporting the NFC technology to periodically and actively radiate a radio frequency signal, to obtain information from an information carrier near the electronic device.

When an existing electronic device reads information in the read mode, information obtaining performance of the existing electronic device is poor, and there are problems of a high information obtaining failure rate and high power consumption.

### SUMMARY

Embodiments of this application are to provide an information obtaining method and apparatus, and an electronic device, to resolve problems of a high information obtaining failure rate and high power consumption when an existing electronic device reads information.

According to a first aspect, an embodiment of this application provides an information obtaining method, where the method includes:
in a case that an information obtaining event is monitored, transmitting a first radio frequency signal with first strength, where the first radio frequency signal is used to obtain card information or target information of a target electronic device; and
in a case that it is monitored that the information obtaining event is released, transmitting a second radio frequency signal with second strength, where the second radio frequency signal is used to obtain the card information or the target information of the target electronic device, and the first strength is greater than the second strength.

According to a second aspect, an embodiment of this application provides an information obtaining apparatus, including:
a first obtaining module, configured to: in a case that an information obtaining event is monitored, transmit a first radio frequency signal with first strength, where the first radio frequency signal is used to obtain card information or target information of a target electronic device; and
a second obtaining module, configured to: in a case that it is monitored that the information obtaining event is released, transmit a second radio frequency signal with second strength, where the second radio frequency signal is used to obtain the card information or the target information of the target electronic device, and the first strength is greater than the second strength.

According to a third aspect, an embodiment of this application provides an electronic device, where the electronic device includes a processor and a memory, the processor stores a program or an instruction that can be run by the processor, and when the program or the instruction is executed by the processor, the steps of the information obtaining method according to the first aspect are implemented
According to a fourth aspect, an embodiment of this application provides a readable storage medium, where the readable storage medium stores a program or an instruction, and when the program or the instruction is executed by a processor, the steps of the information obtaining method according to the first aspect are implemented
According to a fifth aspect, an embodiment of this application provides a chip, where the chip includes a processor and a communication interface, the communication interface is coupled to the processor, and the processor is configured to run a program or an instruction, to implement the information obtaining method according to the first aspect.

According to a sixth aspect, an embodiment of this application provides a computer program product, where the program product is stored in a storage medium, and the program product is executed by at least one processor, to implement the information obtaining method according to the first aspect.

In the embodiments of this application, in a case that the information obtaining event is monitored, the first radio frequency signal with the first strength is transmitted, where the first radio frequency signal is used to obtain the card information or the target information of the target electronic device; and in a case that it is monitored that the information obtaining event is released, the second radio frequency signal with the second strength is transmitted, where the second radio frequency signal is used to obtain the card information or the target information of the target electronic device, and the first strength is greater than the second strength. In this case, when the information obtaining event is monitored, an information obtaining success rate is increased by enhancing strength of a radio frequency signal. When it is monitored that the information obtaining event is released, power consumption is reduced by reducing the strength of the radio frequency signal. Through the foregoing processing, information obtaining performance is improved while the power consumption is balanced.

### BRIEF DESCRIPTION OF THE DRAWINGS

FIG. 1 is a schematic flowchart 1 of an information obtaining method according to an embodiment of this application;
FIG. 2 is a schematic flowchart 2 of an information obtaining method according to an embodiment of this application;
FIG. 3 is a schematic flowchart 3 of an information obtaining method according to an embodiment of this application;
FIG. 4 is a schematic diagram of modules of an information obtaining apparatus according to an embodiment of this application;
FIG. 5 is a schematic structural diagram of an electronic device according to an embodiment of this application; and
FIG. 6 is a schematic diagram of a hardware structure of an electronic device according to an embodiment of this application.

### DETAILED DESCRIPTION

The following clearly describes technical solutions in the embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawings, the following describes in detail the information obtaining method provided in the embodiments of this application by using specific embodiments and application scenarios thereof.

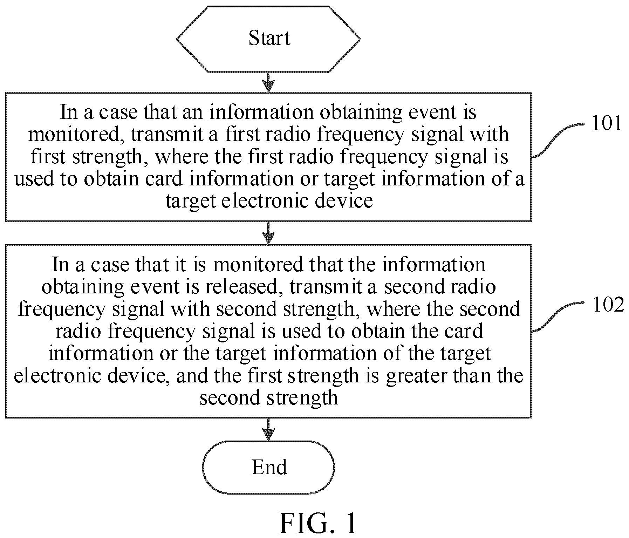

FIG. 1 is a schematic flowchart of an information obtaining method according to an embodiment of this application. The information obtaining method is executed by an electronic device. The method can include the following steps.

Step 101: In a case that an information obtaining event is monitored, transmit a first radio frequency signal with first strength, where the first radio frequency signal is used to obtain card information or target information of a target electronic device.

Herein, the electronic device supports an NFC function, which can make the electronic device act as an information obtainer, to implement an information obtaining function.

The information obtaining event includes but is not limited to: displaying an information obtaining application interface; a distance between an information carrier and the electronic device falls within a preset range; or the distance between the information carrier and the electronic device falls within the preset range, and ambient light brightness of the electronic device is greater than or equal to a preset threshold.

Optionally, the information carrier is a card or a target electronic device.

Herein, the target electronic device includes but is not limited to: a Bluetooth headset, a wireless fidelity (Wireless Fidelity, WiFi) device, and the like.

Herein, the information obtaining application interface is displayed on a screen of the electronic device, that is, the electronic device enters the information obtaining application interface through a user operation, indicating that the electronic device, as the information obtainer, is to obtain information.

The distance between the information carrier and the electronic device falls within the preset range, indicating that the electronic device is near the information carrier. When it is identified that the distance between the information carrier and the electronic device falls within the preset range, it is determined that the electronic device, as the information obtainer, is to obtain information on the information carrier.

Step 102: In a case that it is monitored that the information obtaining event is released, transmit a second radio frequency signal with second strength, where the second radio frequency signal is used to obtain the card information or the target information of the target electronic device, and the first strength is greater than the second strength.

The information obtaining event includes but is not limited to: displaying an information obtaining application interface is canceled; a distance between the information carrier and the electronic device falls outside the preset range; or ambient light brightness of the electronic device is less than a preset threshold.

In this embodiment of this application, the strength (the first strength) of the signal transmitted when the electronic device obtains information is greater than the strength (the second strength) of the signal transmitted when the electronic device does not obtain information. In this case, when information is to be obtained, an information obtaining success rate is increased by enhancing strength of a radio frequency signal. When the information is not to be obtained, power consumption is reduced by reducing the strength of the radio frequency signal. Through the foregoing processing, information obtaining performance is improved while the power consumption is balanced.

In an optional implementation, that an information obtaining event is monitored in this embodiment of this application includes the following step:
S1: In a case that an information obtaining application interface is displayed on a screen, determine that the information obtaining event is monitored.

Herein, the screen can be triggered through a user operation to display the information obtaining application interface. Specifically, a first input is received; and the information obtaining application interface is displayed on the screen in response to the first input.

Optionally, a first input to a target information obtaining application program is received.

Specifically, a first input to an information obtaining function portal or an information obtaining virtual button of the target information obtaining application program may be received.

The information obtaining application program corresponds to the information carrier, and different information carriers correspond to different information obtaining application programs. If the information carrier is a card, the information obtaining application program is a card read application program. For example, if the card is a bank card, the card read application program is a bank application program installed on the electronic device; if the card is a bus card, the card read application program is a bus application program installed on the electronic device; or if the card is an identity identification card, the card read application program is an identity identification program installed on the electronic device.

Herein, the first input is a preset input, such as a click input, a sliding input, or a dragging input. This is not specifically limited herein.

It should be noted that, the information obtaining application interface is displayed on the screen of the electronic device, indicating that an information obtaining function of the electronic device is enabled. Specifically, the information obtaining function, supporting NFC, of the electronic device is enabled, that is, the information obtaining event is monitored.

Then, through the information obtaining application interface, detecting an information carrier near the electronic device is started by using the transmitted radio frequency signal with the first strength, and information obtained from the information carrier is displayed on the information obtaining application interface.

In an optional implementation, that it is monitored that the information obtaining event is released in this embodiment of this application includes the following step:
S11: In a case that displaying an information obtaining application interface is canceled, determine that releasing the information obtaining event is monitored.

Herein, the screen can be triggered through a user operation to cancel displaying of the information obtaining application interface. Specifically, a second input to an information obtaining application interface is received; and displaying of the information obtaining application interface is canceled in response to the second input.

Herein, the second input is a preset input, such as a click input, a sliding input, or a dragging input. This is not specifically limited herein.

Herein, in a case that a main interface (an information obtaining function portal or an information obtaining virtual button is disposed on the main interface) of the information obtaining application program is displayed on the screen or a main interface of a desktop of the electronic device is displayed, it is determined that displaying of the information obtaining application interface is canceled.

It should be noted that, displaying of the information obtaining application interface is canceled, indicating that the electronic device disables an information obtaining function, that is, the electronic device does not obtain information, that is, it is monitored that the information obtaining event is released.

Then, the electronic device adjusts the transmitted first radio frequency signal with the first strength to be the second radio frequency signal with the second strength less than the first strength. In this case, when information is to be obtained, an information obtaining success rate may be increased by enhancing strength of a radio frequency signal. When the information is not to be obtained, a radio frequency signal is transmitted by using strength less than the strength used when information is obtained, thereby reducing power consumption.

The electronic device supports the NFC function and the NFC read mode. The NFC read mode mainly includes a low-power card detection mode and a normal mode. Power consumption corresponding to the low-power card detection mode is low, and a radio frequency signal is weak. Power consumption corresponding to the normal mode is high and a radio frequency signal is strong.

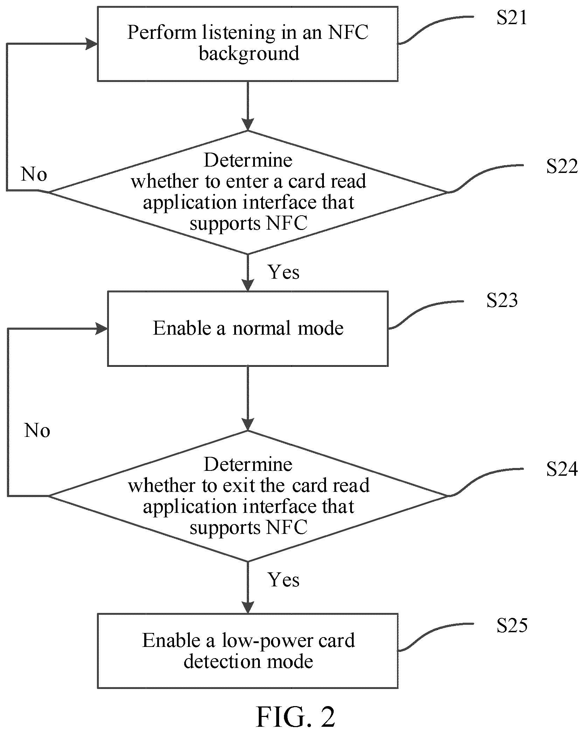

With reference to FIG. 2, a specific implementation process of the information obtaining method in this embodiment of this application is described by using the following example 1.

### Example 1

S21: Perform listening in an NFC background.

S22: Determine whether to enter a card read application interface that supports NFC.

If yes, perform step S23. If no, return to step S21.

S23: Enable a normal mode.

Herein, in the normal mode, a terminal transmits a first radio frequency signal with first strength, and the terminal reads card information based on the first radio frequency signal.

S24: Determine whether to exit the card read application interface that supports NFC.

If yes, perform step S25. If no, maintain the normal mode.

S25: Enable a low-power card detection mode.

Herein, in the low-power card detection mode, the terminal transmits a second radio frequency signal with second strength, and the second strength is less than the first strength.

In the foregoing process from listening in the NFC background to entering the NFC card read application interface, strength of a radio frequency signal in the read mode is actively improved, card read performance is improved, and user experience is improved. However, when the card read interface is exited, switch back to the low-power card detection mode, to reduce power consumption. A good balance is achieved between low power consumption and card read experience.

In another optional implementation, that an information obtaining event is monitored in this embodiment of this application includes the following step:
S31: In a case that it is determined that an information carrier and the electronic device meet a first condition, determine that the information obtaining event is monitored, where the information carrier is a card or a target electronic device, and the first condition is:
a distance between the information carrier and the electronic device falls within a preset range.

Herein, the distance between the information carrier and the electronic device falls within the preset range, indicating that the electronic device is near the information carrier. Specifically, the distance between the information carrier and the electronic device can be identified by using a camera.

It should be noted that, an NFC antenna is usually located near a rear camera. When information is to be obtained, the information carrier sticks to the NFC antenna and blocks the rear camera. Therefore, whether the information carrier is nearby is detected by using the rear camera.

Further, the first condition further includes: ambient light brightness of the electronic device is greater than or equal to a preset threshold.

It should be noted that, the ambient light brightness of the electronic device specifically refers to ambient light brightness of same space in which the electronic device and the information carrier are located.

It should be noted that, the ambient light brightness of the electronic device is greater than or equal to the preset threshold, a purpose of which is to eliminate a false information obtaining touch caused by the electronic device and the information carrier (usually a card in this case) being placed together in a closed environment in a pocket or bag.

Specifically, the ambient light brightness can be detected by using an infrared sensor, that is, it is determined whether the electronic device is in a dark environment.

In an optional implementation, that it is monitored that the information obtaining event is released in this embodiment of this application includes the following step:

S41: In a case that it is determined that the information carrier and the electronic device meet a second condition, determine that releasing the information obtaining event is monitored, where the second condition is:
the distance between the information carrier and the electronic device falls outside the preset range; and/or
ambient light brightness of the electronic device is less than a preset threshold.

Herein, the distance between the information carrier and the electronic device falls outside the preset range, indicating that the electronic device is far away from the information carrier and does not need to obtain information.

The ambient light brightness of the electronic device is less than the preset threshold, indicating that both the information carrier and the electronic device are in a dark environment, and that the electronic device cannot obtain information.

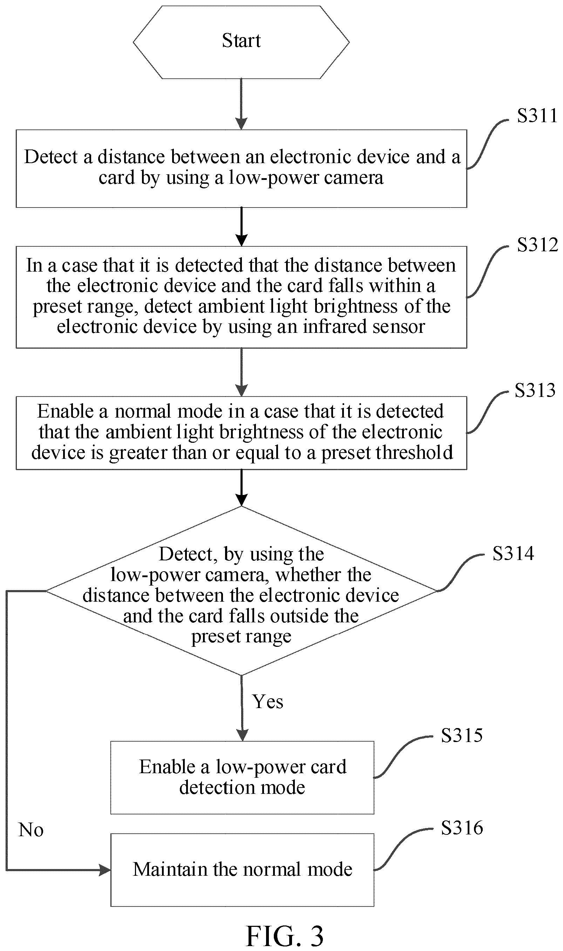

With reference to FIG. 3, a specific implementation process of the information obtaining method in this embodiment of this application is described by using the following example 2.

### Example 2

S311: Detect a distance between an electronic device and a card by using a low-power camera.

That is, whether the card is near the electronic device is detected by using the low-power camera.

S312: In a case that it is detected that the distance between the electronic device and the card falls within a preset range, detect ambient light brightness of the electronic device by using an infrared sensor. S313: Enable a normal mode in a case that it is detected that the ambient light brightness of the electronic device is greater than or equal to a preset threshold.

Herein, in the normal mode, a terminal transmits a first radio frequency signal with first strength, and the terminal reads card information based on the first radio frequency signal.

S314: Detect, by using the low-power camera, whether the distance between the electronic device and the card falls outside the preset range.

That is, whether the card is far away from the electronic device is detected by using the low-power camera.

If yes, perform step S315. If no, perform step S316.

S315: Enable a low-power card detection mode.

Herein, in the low-power card detection mode, the terminal transmits a second radio frequency signal with second strength, and the second strength is less than the first strength.

S316: Maintain the normal mode.

In the foregoing process, in a case that the low-power camera detects that a card gets close (and whether a dark environment is used is detected by using an infrared sensor to rule out a false touch), strength of a radio frequency signal in a read mode is actively increased, card read performance is improved, and user experience is improved. When it is detected that the card gets far away, switch back to the low-power card detection mode, to reduce power consumption. A relatively good balance is achieved between low power consumption and card read experience.

In an optional implementation, when the first radio frequency signal is used to obtain the target information of the target electronic device, after step 101, the method according to this embodiment of this application further includes:
connecting to the target electronic device in a case that the target information is obtained.

Optionally, the target information of the target electronic device is stored in an electronic tag, and the electronic device obtains the target information of the target electronic device by reading the electronic tag.

In this implementation, after the target information is obtained, the target electronic device can be identified, and is connected based on the target information. In this case, many operation steps by the user can be saved, to implement a fast connection between devices.

For example, after the target information is obtained, if the target electronic device is identified as a Bluetooth headset, a Bluetooth function of the electronic device is triggered based on the target information to be enabled, to implement a connection to the target electronic device.

The information obtaining method provided in this embodiment of this application may be executed by an information obtaining apparatus. In the embodiments of this application, that the information obtaining apparatus performs the information obtaining method is used as an example to describe the information obtaining apparatus provided in the embodiments of this application.

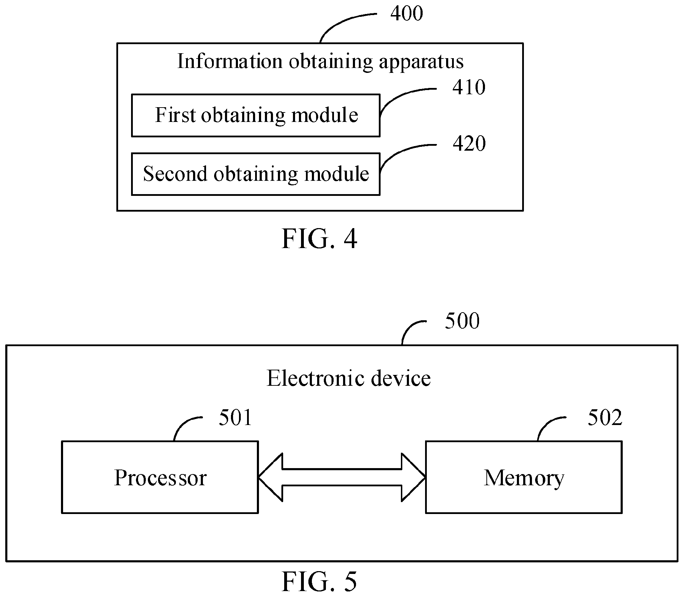

As shown in FIG. 4, an embodiment of this application provides an information obtaining apparatus. The apparatus 400 includes:
a first obtaining module 410, configured to: in a case that an information obtaining event is monitored, transmit a first radio frequency signal with first strength, where the first radio frequency signal is used to obtain card information or target information of a target electronic device; and
a second obtaining module 420, configured to: in a case that it is monitored that the information obtaining event is released, transmit a second radio frequency signal with second strength, where the second radio frequency signal is used to obtain the card information or the target information of the target electronic device, and the first strength is greater than the second strength.

Optionally, the first obtaining module 410 includes:
a first processing unit, configured to: in a case that an information obtaining application interface is displayed on a screen, determine that the information obtaining event is monitored.

Optionally, the second obtaining module 420 includes:
a second processing unit, configured to: in a case that displaying an information obtaining application interface is canceled, determine that releasing the information obtaining event is monitored.

Optionally, the first obtaining module 410 includes:
a third processing unit, configured to: in a case that it is determined that an information carrier and the electronic device meet a first condition, determine that the information obtaining event is monitored, where the information carrier is a card or the target electronic device; and
the first condition is:
   a distance between the information carrier and the electronic device falls within a preset range.

Optionally, the first condition further includes: ambient light brightness of the electronic device is greater than or equal to a preset threshold.

Optionally, the second obtaining module 420 includes:
a fourth processing unit, configured to: in a case that it is determined that the information carrier and the electronic device meet a second condition, determine that releasing the information obtaining event is monitored, where
the second condition is:
   the distance between the information carrier and the electronic device falls outside the preset range; and/or
   ambient light brightness of the electronic device is less than a preset threshold.

Optionally, the apparatus 400 in this embodiment of this application further includes:
a processing module, configured to connect to the target electronic device in a case that the first radio frequency signal is used to obtain the target information of the target electronic device and the target information is obtained.

In a case that the information obtaining event is monitored, the information obtaining apparatus in this embodiment of this application transmits the first radio frequency signal with the first strength, where the first radio frequency signal is used to obtain the card information or the target information of the target electronic device; and in a case that it is monitored that the information obtaining event is released, transmits the second radio frequency signal with the second strength, where the second radio frequency signal is used to obtain the card information or the target information of the target electronic device, and the first strength is greater than the second strength. In this case, when the information obtaining event is monitored, an information obtaining success rate is increased by enhancing strength of a radio frequency signal. When it is monitored that the information obtaining event is released, power consumption is reduced by reducing the strength of the radio frequency signal. Through the foregoing processing, information obtaining performance is improved while the power consumption is balanced.

The information obtaining apparatus in this embodiment of this application may be an electronic device, or may be a component such as a circuit or a chip in the electronic device. The electronic device may be a terminal, or another device other than the terminal. For example, the electronic device may be a mobile phone, a tablet computer, a notebook computer, a palmtop computer, an in-vehicle electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like. The electronic device may alternatively be a server, a network attached storage (Network Attached Storage, NAS), a personal computer (personal computer, PC), a television (television, TV), a teller machine, a self-service machine, or the like. This is not specifically limited in the embodiments of this application.

The information obtaining apparatus in this embodiment of this application may be an apparatus with an operating system. The operating system may be an Android (Android) operating system, an iOS operating system, or another possible operating system. This is not specifically limited in the embodiments of this application.

The information obtaining apparatus provided in this embodiment of this application can implement the processes implemented in the method embodiments shown in FIG. 1 to FIG. 3. To avoid repetition, details are not described herein again.

Optionally, as shown in FIG. 5, an embodiment of this application further provides an electronic device 500, including a processor 501 and a memory 502. A program or an instruction that can be run by the processor 501 is stored in the memory 502. When the program or the instruction is executed by the processor 501, the steps of the embodiment of the foregoing information obtaining method are implemented, and a same technical effect can be achieved. To avoid repetition, details are not described herein again.

It should be noted that, the electronic device in this embodiment of this application includes the foregoing mobile electronic device and the foregoing non-mobile electronic device.

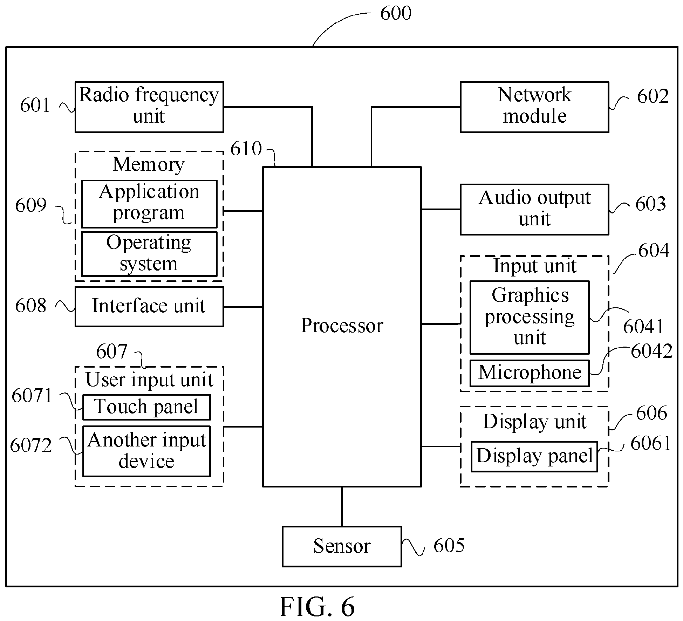

FIG. 6 is a schematic diagram of a hardware structure of an electronic device according to an embodiment of this application.

The electronic device 600 includes but is not limited to: components such as a radio frequency unit 601, a network module 602, an audio output unit 603, an input unit 604, a sensor 605, a display unit 606, a user input unit 607, an interface unit 608, a memory 609, and a processor 610.

A person skilled in the art can understand that the electronic device 600 may further include a power supply (such as a battery) that supplies power to each component. The power supply may be logically connected to the processor 610 by using a power supply management system, to implement functions such as charging and discharging management, and power consumption management by using the power supply management system. The structure of the electronic device shown in FIG. 6 does not constitute a limitation on the electronic device. The electronic device may include components more or fewer than those shown in the diagram, a combination of some components, or different component arrangements. Details are not described herein.

In a case that the processor 610 monitors an information obtaining event, the radio frequency unit 601 is configured to transmit a first radio frequency signal with first strength, where the first radio frequency signal is used to obtain card information or target information of a target electronic device.

In a case that the processor 610 monitors that the information obtaining event is released, the radio frequency unit 601 is configured to transmit a second radio frequency signal with second strength, where the second radio frequency signal is used to obtain the card information or the target information of the target electronic device, and the first strength is greater than the second strength.

Optionally, the processor 610 is further configured to: in a case that an information obtaining application interface is displayed on a screen, determine that the information obtaining event is monitored.

Optionally, the processor 610 is further configured to: in a case that displaying an information obtaining application interface is canceled, determine that releasing the information obtaining event is monitored.

Optionally, the processor 610 is further configured to: in a case that it is determined that an information carrier and the electronic device meet a first condition, determine that the information obtaining event is monitored, where the information carrier is a card or the target electronic device; and the first condition is:
a distance between the information carrier and the electronic device falls within a preset range.

Optionally, the first condition further includes: ambient light brightness of the electronic device is greater than or equal to a preset threshold.

Optionally, the processor 610 is further configured to: in a case that it is determined that the information carrier and the electronic device meet a second condition, determine that releasing the information obtaining event is monitored, where the second condition is:
the distance between the information carrier and the electronic device falls outside the preset range; and/or
ambient light brightness of the electronic device is less than a preset threshold.

Optionally, in a case that the first radio frequency signal is used to obtain the target information of the target electronic device, the processor 610 is further configured to connect to the target electronic device in a case that the target information is obtained.

In a case that the information obtaining event is monitored, the electronic device in this embodiment of this application transmits the first radio frequency signal with the first strength, where the first radio frequency signal is used to obtain the card information or the target information of the target electronic device; and in a case that it is monitored that the information obtaining event is released, transmits the second radio frequency signal with the second strength, where the second radio frequency signal is used to obtain the card information or the target information of the target electronic device, and the first strength is greater than the second strength. In this case, when the information obtaining event is monitored, an information obtaining success rate is increased by enhancing strength of a radio frequency signal. When it is monitored that the information obtaining event is released, power consumption is reduced by reducing the strength of the radio frequency signal. Through the foregoing processing, information obtaining performance is improved while the power consumption is balanced.

It should be understood that in this embodiment of this application, the input unit 604 may include a graphics processing unit (Graphics Processing Unit, GPU) 6041 and a microphone 6042. The graphics processing unit 6041 processes image data of a static picture or a video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein.

The memory 609 may be configured to store a software program and various data. The memory 609 may mainly include a first storage area for storing a program or an instruction and a second storage area for storing data. The first storage area may store an operating system, and an application program or an instruction required by at least one function (such as a sound playing function or an image playing function). In addition, the memory 609 may be a volatile memory or a non-volatile memory, or the memory 609 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 609 in this embodiment of this application includes but is not limited to these memories and any memory of another proper type.

The processor 610 may include one or more processing units. Optionally, an application processor and a modem processor are integrated into the processor 610, the application processor mainly processes operations related to an operating system, a user interface, an application program, and the like, and the modem processor mainly processes a wireless communication signal, for example, a baseband processor. It may be understood that the foregoing modem processor may alternatively not be integrated into the processor 610.

An embodiment of this application further provides a readable storage medium. The readable storage medium stores a program or an instruction, and the program or the instruction is executed by a processor to implement the processes in the embodiment of the foregoing information obtaining method, and a same technical effect can be achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the embodiment of the foregoing information obtaining method, and a same technical effect can be achieved. To avoid repetition, details are not described herein again.

It should be understood that the chip mentioned in this embodiment of this application may alternatively be referred to as a system-level chip, a system chip, a chip system, or an on-chip system chip.

An embodiment of this application further provides a computer software product. The software product is stored in a storage medium, and the software product is executed by at least one processor to implement the processes of the embodiment of the foregoing information obtaining method, and a same technical effect can be achieved. To avoid repetition, details are not described herein again.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. An information obtaining method, applied to an electronic device, wherein the method comprises:
in a case that an information obtaining event is monitored, transmitting a first radio frequency signal with first strength, wherein the first radio frequency signal is used to obtain card information or target information of a target electronic device; and
in a case that it is monitored that the information obtaining event is released, transmitting a second radio frequency signal with second strength, wherein the second radio frequency signal is used to obtain the card information or the target information of the target electronic device, and the first strength is greater than the second strength.

2. The method according to claim 1, wherein that an information obtaining event is monitored comprises:
in a case that an information obtaining application interface is displayed on a screen, determining that the information obtaining event is monitored.

3. The method according to claim 1 or 2, wherein that it is monitored that the information obtaining event is released comprises:
in a case that displaying an information obtaining application interface is canceled, determining that releasing the information obtaining event is monitored.

4. The method according to claim 1, wherein that an information obtaining event is monitored comprises:
in a case that it is determined that an information carrier and the electronic device meet a first condition, determining that the information obtaining event is monitored, wherein the information carrier is a card or the target electronic device; and
the first condition comprises:
a distance between the information carrier and the electronic device falls within a preset range.

5. The method according to claim 4, wherein the first condition further comprises: ambient light brightness of the electronic device is greater than or equal to a preset threshold.

6. The method according to claim 1 or 4, wherein that it is monitored that the information obtaining event is released comprises:
in a case that it is determined that the information carrier and the electronic device meet a second condition, determining that releasing the information obtaining event is monitored, wherein
the second condition is:
a distance between the information carrier and the electronic device falls outside the preset range; and/or,
ambient light brightness of the electronic device is less than a preset threshold.

7. The method according to claim 1, wherein in a case that the first radio frequency signal is used to obtain the target information of the target electronic device,
after the first radio frequency signal with the first strength is transmitted in a case that the information obtaining event is monitored, the method further comprises:
connecting to the target electronic device in a case that the target information is obtained.

8. An information obtaining apparatus, applied to an electronic device, wherein the apparatus comprises:
a first obtaining module, configured to: in a case that an information obtaining event is monitored, transmit a first radio frequency signal with first strength, wherein the first radio frequency signal is used to obtain card information or target information of a target electronic device; and
a second obtaining module, configured to: in a case that it is monitored that the information obtaining event is released, transmit a second radio frequency signal with second strength, wherein the second radio frequency signal is used to obtain the card information or the target information of the target electronic device, and the first strength is greater than the second strength.

9. The apparatus according to claim 8, wherein the first obtaining module comprises:
a first processing unit, configured to: in a case that an information obtaining application interface is displayed on a screen, determine that the information obtaining event is monitored.

10. The apparatus according to claim 8 or 9, wherein the second obtaining module comprises:
a second processing unit, configured to: in a case that displaying an information obtaining application interface is canceled, determine that releasing the information obtaining event is monitored.

11. The apparatus according to claim 8, wherein the first obtaining module comprises:
a third processing unit, configured to: in a case that it is determined that an information carrier and the electronic device meet a first condition, determine that the information obtaining event is monitored, wherein the information carrier is a card or the target electronic device; and
the first condition is:
a distance between the information carrier and the electronic device falls within a preset range.

12. The apparatus according to claim 11, wherein the first condition further comprises: ambient light brightness of the electronic device is greater than or equal to a preset threshold.

13. The apparatus according to claim 8 or 11, wherein the second obtaining module comprises:
a fourth processing unit, configured to: in a case that it is determined that the information carrier and the electronic device meet a second condition, determine that releasing the information obtaining event is monitored, wherein
the second condition is:
a distance between the information carrier and the electronic device falls outside the preset range; and/or,
ambient light brightness of the electronic device is less than a preset threshold.

14. The apparatus according to claim 8, wherein the apparatus further comprises:
a processing module, configured to connect to the target electronic device in a case that the first radio frequency signal is used to obtain the target information of the target electronic device and the target information is obtained.

15. An electronic device, comprising a processor and a memory, wherein the memory stores a program or an instruction that can be run by the processor, and when the program or the instruction is executed by the processor, the steps of the information obtaining method according to any one of claims 1 to 7 are implemented.

16. A readable storage medium, wherein the readable storage medium stores a program or an instruction, and when the program or the instruction is executed by a processor, the steps of the information obtaining method according to any one of claims 1 to 7 are implemented.

17. A chip, wherein the chip comprises a processor and a communication interface, the communication interface is coupled to the processor, and the processor is configured to run a program or an instruction, to implement the information obtaining method according to any one of claims 1 to 7.

18. A computer program product, wherein the computer program product is executed by at least one processor, to implement the information obtaining method according to any one of claims 1 to 7.

19. An electronic device, wherein the electronic device is configured to perform the information obtaining method according to any one of claims 1 to 7.
